# FASCICULE DE BREVET EUROPEEN

(11) **EP 3 433 550 B1**
(45) Date de publication et mention de la délivrance du brevet: **09.10.2019**
(21) Numéro de dépôt: 17711251.3
(22) Date de dépôt: 14.02.2017
(51) Int. Cl.: F25B 41/00, F25B 5/04, F25B 5/02

(54) **CIRCUIT DE CLIMATISATION DE VÉHICULE AUTOMOBILE**
KLIMAANLAGENKREISLAUF EINES KRAFTFAHRZEUGS
MOTOR VEHICLE AIR-CONDITIONING CIRCUIT

(30) Priorité: 25.03.2016 FR 1652619
(43) Date de publication de la demande: 30.01.2019
(73) Titulaire: Valeo Systemes Thermiques, 78320 Le Mesnil Saint Denis (FR)
(72) Inventeur: YAHIA, Mohamed, 75013 PARIS (FR); NICOLAS, Bertrand, 92150 SURESNES (FR); HALLER, Régine, 78490 BOISSY-SANS-AVOIR (FR); CLEMARON, Laetitia, 75014 PARIS (FR); THUEZ, Jean-Luc, 78112 FOURQUEUX (FR); LIU, Jin-Ming, 78700 CONFLANS SAINTE-HONORINE (FR)
(74) Mandataire: Metz, Gaëlle
(86) Numéro de dépôt international: PCT/FR2017/050339
(87) Numéro de publication internationale: WO 2017/162940

(56) Documents cités:
- FR-A1- 2 936 596
- JP-A- 2006 292 351
- US-A1- 2010 132 400

## Description

L'invention se rapporte au domaine des véhicules automobiles et plus particulièrement à un circuit de climatisation de véhicule automobile.

Les véhicules automobiles actuels comportent de plus en plus souvent un circuit de climatisation. Généralement, dans un circuit de climatisation « classique », un fluide réfrigérant passe successivement dans un compresseur, un condenseur placé en contact avec un flux d'air extérieur au véhicule automobile pour libérer de la chaleur, un dispositif de détente et un évaporateur placé en contact avec un flux d'air intérieur du véhicule automobile pour le refroidir.

Les performances d'un circuit de climatisation sont généralement retranscrites par un coefficient de performance (COP pour « coefficient of perfomance » en anglais) qui correspond au quotient entre la chaleur restituée, au niveau du condenseur, et le travail fourni, notamment par le compresseur.

Afin d'améliorer le COP du circuit de climatisation il est connu d'utiliser comme dispositif de détente un éjecteur qui comporte :
- une première entrée de fluide réfrigérant en provenance du condenseur,
- une sortie de fluide réfrigérant en direction d'un dispositif de séparation de phases, et
- une deuxième entrée de fluide réfrigérant en provenance d'un évaporateur.

Au niveau du dispositif de séparation de phases, la phase liquide du fluide réfrigérant est redirigée vers l'évaporateur et la phase gazeuse du fluide réfrigérant est quant à elle redirigée vers le compresseur.

Cependant, lors de températures extérieures très basses, l'influence d'un éjecteur sur le COP peut être limitée voir s'inverser, c'est-à-dire que le COP peut diminuer et être inférieur à celui d'un circuit de climatisation « classique ».

Afin d'éviter cette diminution du COP, il est connu d'équiper le circuit de climatisation avec un échangeur de chaleur interne (IHX pour « internai heat exchanger » en anglais) qui permet un échange de chaleur entre le fluide réfrigérant en sortie du condenseur et le fluide réfrigérant en phase gazeuse en provenance du dispositif de séparation de phase.

Cependant, l'utilisation d'un IHX diminue la température du fluide réfrigérant à l'entrée de l'éjecteur ce qui diminue l'efficacité dudit éjecteur et son impact sur le COP.

Le document FR-A-2 936 596 décrit un circuit de climatisation selon le préambule de la revendication 1.

Un des buts de la présente invention est donc de remédier au moins partiellement aux inconvénients de l'art antérieur et de proposer un circuit de climatisation amélioré.

La présente invention concerne donc un circuit de climatisation pour véhicule automobile dans lequel circule un fluide réfrigérant et comportant dans le sens de circulation du fluide réfrigérant :
∘ un compresseur,
∘ un premier échangeur de chaleur destiné à être traversé par un flux d'air extérieur au véhicule automobile et disposé en aval du compresseur,
∘ un éjecteur disposé en aval du premier échangeur de chaleur, et comprenant :
   - une première entrée de fluide réfrigérant, reliée audit premier échangeur de chaleur,
   - une deuxième entrée de fluide réfrigérant, et
   - une sortie de fluide réfrigérant,
∘ un dispositif de séparation de phases du fluide réfrigérant comportant :
   - une entrée de fluide réfrigérant, reliée à la sortie de fluide réfrigérant de l'éjecteur,
   - une première sortie de fluide réfrigérant en phase gazeuse, reliée au compresseur, et
   - une deuxième sortie de fluide réfrigérant en phase liquide,
∘ un dispositif de détente disposé en aval de la deuxième sortie de fluide réfrigérant du dispositif de séparation de phases,
∘ un deuxième échangeur de chaleur destiné à être traversé par un flux d'air intérieur à destination de l'habitacle du véhicule automobile, ledit deuxième échangeur étant disposé en aval du dispositif de détente, entre ledit dispositif de détente et la deuxième entrée de fluide réfrigérant de l'éjecteur,
le circuit de climatisation comportant en outre une conduite de contournement du dispositif de séparation de phases et reliant :
∘ un premier point de jonction disposé en aval de la sortie de fluide réfrigérant de l'éjecteur, entre ledit éjecteur et le dispositif de séparation de phases, et
∘ un deuxième point de jonction disposé en aval de la première sortie du dispositif de séparation de phases, entre ledit dispositif de séparation de phases et le compresseur,
ladite conduite de contournement comportant un troisième échangeur de chaleur.

Selon un aspect de l'invention, le circuit de climatisation comporte un dispositif de gestion et de distribution du fluide réfrigérant en provenance de l'éjecteur vers la conduite de contournement et/ou le dispositif de séparation de phases.

Selon un autre aspect de l'invention, le dispositif de gestion et de distribution comporte une première vanne d'arrêt disposée entre le premier point de jonction et le dispositif de séparation de phases.

Selon un autre aspect de l'invention, le dispositif de gestion et de distribution comporte une deuxième vanne d'arrêt disposée sur la conduite de contournement.

Selon un autre aspect de l'invention, le dispositif de gestion et de distribution comporte une vanne à ouverture variable disposée sur la conduite de contournement.

Selon un autre aspect de l'invention, le dispositif de gestion et de distribution comporte une vanne trois voies à débit variable disposée au niveau du premier point de jonction.

Selon un autre aspect de l'invention, le troisième échangeur de chaleur est destiné à être traversé par le flux d'air intérieur à destination de l'habitacle du véhicule automobile.

Selon un autre aspect de l'invention, le troisième échangeur de chaleur est placé en amont du deuxième échangeur de chaleur dans le sens de circulation du flux d'air intérieur à destination de l'habitacle du véhicule automobile.

Selon un autre aspect de l'invention, le circuit de climatisation comporte un échangeur de chaleur interne permettant un échange de chaleur entre le fluide réfrigérant en sortie du premier échangeur de chaleur et le fluide réfrigérant en sortie du dispositif de séparation de phases et/ou du troisième échangeur de chaleur.

Selon un autre aspect de l'invention, le circuit de climatisation est configuré pour fonctionner dans un premier mode de fonctionnement où le fluide réfrigérant passe successivement dans le compresseur, le premier échangeur de chaleur, l'éjecteur,
∘ une première portion de fluide réfrigérant passant par le dispositif de séparation de phases, et :
   ▪ la phase liquide du fluide réfrigérant passe ensuite dans le dispositif de détente, le deuxième échangeur de chaleur, le fluide réfrigérant revenant dans l'éjecteur,
   ▪ la phase gazeuse du fluide réfrigérant retourne vers le compresseur, et
∘ une deuxième portion du fluide réfrigérant passant par le troisième échangeur de chaleur de la conduite de contournement avant de retourner vers le compresseur.

Selon un autre aspect de l'invention, le fluide réfrigérant en sortie du premier échangeur de chaleur passe dans l'échangeur de chaleur interne avant d'arriver à l'éjecteur, la phase gazeuse du fluide réfrigérant en sortie du dispositif de séparation de phases et le fluide réfrigérant en sortie du troisième échangeur de chaleur se mélange avant de passer dans l'échangeur de chaleur interne pour ensuite retourner vers le compresseur.

Selon un autre aspect de l'invention, le circuit de climatisation est configuré pour fonctionner dans un deuxième mode de fonctionnement où le fluide réfrigérant passe successivement dans le compresseur, le premier échangeur de chaleur, l'éjecteur, le troisième échangeur de chaleur de la conduite de contournement avant de retourner vers le compresseur.

Selon un autre aspect de l'invention, le fluide réfrigérant en sortie du premier échangeur de chaleur passe dans l'échangeur de chaleur interne avant d'arriver à l'éjecteur et le fluide réfrigérant en sortie du troisième échangeur de chaleur passe dans l'échangeur de chaleur interne avant de retourner vers le compresseur.

Selon un autre aspect de l'invention, le circuit de climatisation est configuré pour fonctionner dans un troisième mode de fonctionnement où le fluide réfrigérant passe successivement dans le compresseur, le premier échangeur de chaleur, l'éjecteur, le dispositif de séparation de phases, et :
∘ la phase liquide du fluide réfrigérant passe ensuite dans le dispositif de détente, le deuxième échangeur de chaleur, le fluide réfrigérant revenant dans l'éjecteur,
∘ la phase gazeuse du fluide réfrigérant retourne vers le compresseur.

Selon un autre aspect de l'invention, le fluide réfrigérant en sortie du premier échangeur de chaleur passe dans l'échangeur de chaleur interne avant d'arriver à l'éjecteur et la phase gazeuse du fluide réfrigérant en sortie du dispositif de séparation de phases passe dans l'échangeur de chaleur interne avant de retourner vers le compresseur.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'un circuit de climatisation selon un premier mode de réalisation,
- la figure 2 montre une représentation schématique d'un circuit de climatisation selon un deuxième mode de réalisation,
- la figure 3a montre une représentation schématique du circuit de climatisation de la figure 1 selon un premier mode de fonctionnement,
- la figure 3b montre un diagramme pression / enthalpie du fluide réfrigérant selon le premier mode de fonctionnement de la figure 3a,
- la figure 4a montre une représentation schématique du circuit de climatisation de la figure 2 selon une variante du premier mode de fonctionnement,
- la figure 4b montre un diagramme pression / enthalpie du fluide réfrigérant selon la variante du premier mode de fonctionnement de la figure 4a,
- les figures 5a à 5c montrent des représentations schématiques de dispositifs de gestion et de distribution selon différents modes de réalisation,
- la figure 6a montre une représentation schématique du circuit de climatisation de la figure 1 selon un deuxième mode de fonctionnement,
- la figure 6b montre un diagramme pression / enthalpie du fluide réfrigérant selon le deuxième mode de fonctionnement de la figure 6a.
- la figure 7a montre une représentation schématique du circuit de climatisation de la figure 2 selon une variante du deuxième mode de fonctionnement,
- la figure 7b montre un diagramme pression / enthalpie du fluide réfrigérant selon la variante du deuxième mode de fonctionnement de la figure 7a.
- la figure 8a montre une représentation schématique du circuit de climatisation de la figure 1 selon un troisième mode de fonctionnement,
- la figure 8b montre un diagramme pression / enthalpie du fluide réfrigérant selon le troisième mode de fonctionnement de la figure 8a.
- la figure 9a montre une représentation schématique du circuit de climatisation de la figure 2 selon une variante du troisième mode de fonctionnement,
- la figure 9b montre un diagramme pression / enthalpie du fluide réfrigérant selon la variante du troisième mode de fonctionnement de la figure 9a,
- la figure 10a montre une représentation schématique du circuit de climatisation de la figure 1 selon un quatrième mode de fonctionnement,
- la figure 10b montre une représentation schématique du circuit de climatisation de la figure 2 selon le quatrième mode de fonctionnement.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un fluide. A contrario, on entend par « placé en aval » qu'un élément est placé après un autre par rapport au sens de circulation du fluide.

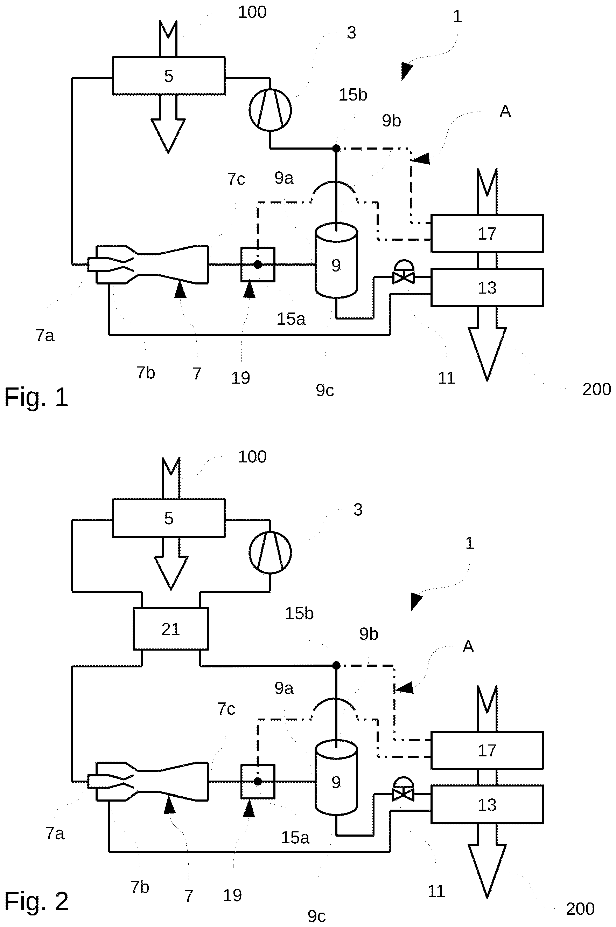

La figure 1 montre un circuit de climatisation 1 pour véhicule automobile dans lequel circule un premier fluide réfrigérant selon un premier mode de réalisation. Le circuit de climatisation 1 comporte dans le sens de circulation du fluide réfrigérant :
∘ un compresseur 3,
∘ un premier échangeur de chaleur 5 destiné à être traversé par un flux d'air extérieur 100 au véhicule automobile et disposé en aval du compresseur 3,
∘ un éjecteur 7 disposé en aval du premier échangeur de chaleur 5, et comprenant :
   - une première entrée 7a de fluide réfrigérant, reliée audit premier échangeur de chaleur 5,
   - une deuxième entrée 7b de fluide réfrigérant, et
   - une sortie 7c de fluide réfrigérant,
∘ un dispositif de séparation de phases 9 du fluide réfrigérant comportant :
   - une entrée de fluide réfrigérant 9a, reliée à la sortie 7c de fluide réfrigérant de l'éjecteur 7,
   - une première sortie 9b de fluide réfrigérant en phase gazeuse, reliée au compresseur 3, et
   - une deuxième sortie 9c de fluide réfrigérant en phase liquide,
∘ un dispositif de détente 11 disposé en aval de la deuxième sortie 9c de fluide réfrigérant du dispositif de séparation de phases 9,
∘ un deuxième échangeur de chaleur 13 destiné à être traversé par un flux d'air intérieur 200 à destination de l'habitacle du véhicule automobile, ledit deuxième échangeur 13 étant disposé en aval du dispositif de détente 11, entre ledit dispositif de détente 11 et la deuxième entrée 7b de fluide réfrigérant de l'éjecteur 7.

Le fluide réfrigérant peut notamment être du dioxyde de carbone connu dans le domaine des circuit de climatisation sous le nom R744.

Le circuit de climatisation 1 comporte en outre une conduite de contournement A du dispositif de séparation de phases 9 et reliant :
∘ un premier point de jonction 15a disposé en aval de la sortie 7c de fluide réfrigérant de l'éjecteur 7, entre ledit éjecteur 7 et le dispositif de séparation de phases 9, et
∘ un deuxième point de jonction 15b disposé en aval de la première sortie 9b du dispositif de séparation de phases 9, entre ledit dispositif de séparation de phases 9 et le compresseur 3.

La conduite de contournement A comporte également un troisième échangeur de chaleur 17.

Comme le montre la figure 2, le circuit de climatisation peut également comporter un échangeur de chaleur interne 21 (IHX pour « internai heat exchanger ») permettant un échange de chaleur entre le fluide réfrigérant en sortie du premier échangeur de chaleur 5 et le fluide réfrigérant en sortie du dispositif de séparation de phases 9 et/ou du troisième échangeur de chaleur 17. Les autres éléments sont identiques à ceux de la figure 1.

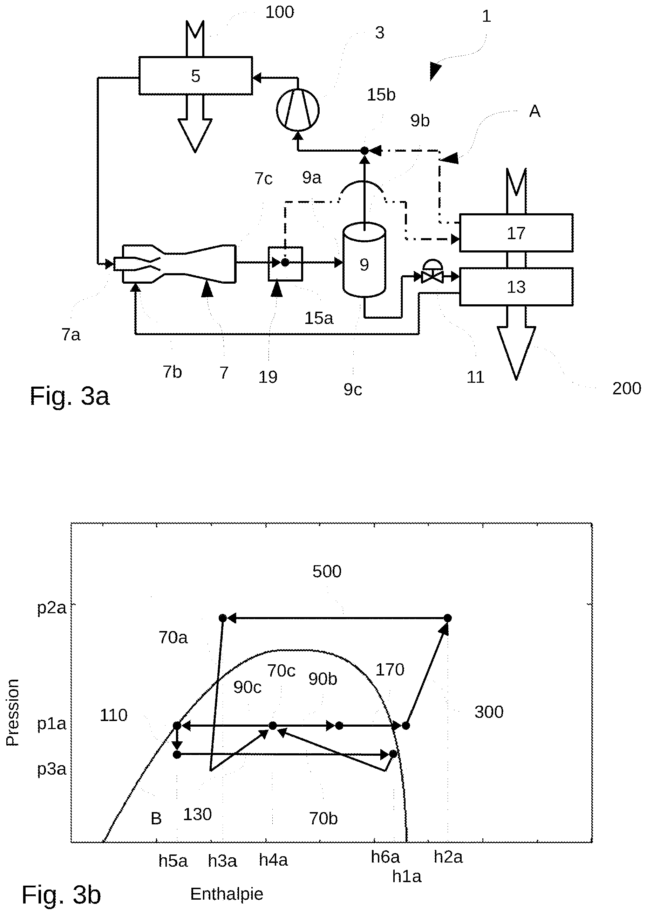

La présence de la conduite de contournement A et du troisième échangeur de chaleur 17 permet au circuit de climatisation 1 de fonctionner selon un premier mode de fonctionnement illustré à la figure 3a, où le sens de circulation du fluide réfrigérant est représenté par des flèches.

Dans ce premier mode de fonctionnement de la figure 3a, le fluide réfrigérant passe successivement dans le compresseur 3, le premier échangeur de chaleur 5, et l'éjecteur 7. Le flux de fluide réfrigérant est ensuite divisé au niveau du premier point de jonction 15a de sorte que :
∘ une première portion de fluide réfrigérant passe par le dispositif de séparation de phases 9, et :
   ▪ la phase liquide du fluide réfrigérant passe ensuite dans le dispositif de détente 11, le deuxième échangeur de chaleur 13, le fluide réfrigérant revenant dans l'éjecteur 7,
   ▪ la phase gazeuse du fluide réfrigérant retourne vers le compresseur 3, et
∘ une deuxième portion du fluide réfrigérant passe par le troisième échangeur de chaleur 17 de la conduite de contournement A avant de retourner vers le compresseur 3, via le deuxième point de jonction 15b.

Les variations de pression et d'enthalpie que subit le fluide réfrigérant lors de ce premier mode de fonctionnement, sont illustrées sur le diagramme pression / enthalpie de la figure 3b. La courbe B représente la courbe de saturation du fluide réfrigérant.

Le fluide réfrigérant à l'entrée du compresseur 3 est en phase gazeuse à une pression p1a et a une enthalpie h1a. Le fluide réfrigérant subit une compression, illustrée par la flèche 300, en passant dans le compresseur 3 et passe à une pression p2a pour une enthalpie h2a.

Le fluide réfrigérant traverse le premier échangeur de chaleur 5 et subit une perte d'enthalpie, illustrée par la flèche 500, du fait de la dissipation de chaleur dans le flux d'air extérieur 100 et de son passage en phase liquide. Le fluide réfrigérant passe alors d'une enthalpie h2a à une enthalpie h3a, tout en restant à une pression constante p2a.

Le fluide réfrigérant passe ensuite dans la première entrée 7a de l'éjecteur 7. Le fluide réfrigérant subit une perte de pression, illustrée par la flèche 70a et croise la courbe de saturation B, ce qui le fait passer dans un état de mélange liquide plus gaz. Le fluide réfrigérant subit ensuite une recompression dans l'éjecteur 7, pour atteindre la sortie 7c dudit l'éjecteur 7, illustrée par le point 70c. A la sortie 7c de l'éjecteur 7, le fluide réfrigérant est à la pression p1a et a une enthalpie h4a supérieure à l'enthalpie h3a précédente.

Une partie du fluide réfrigérant passe ensuite dans le dispositif de séparation de phases 9, alors que l'autre partie du fluide réfrigérant passe dans la conduite de contournement A.

Au niveau du dispositif de séparation de phases 9, la phase liquide du fluide réfrigérant est séparée de la phase gazeuse. De ce fait, l'enthalpie du fluide réfrigérant en phase liquide à la deuxième sortie 9c du dispositif de séparation de phases 9, diminue pour rejoindre la courbe de saturation B et atteindre une valeur h5a. Cette diminution est illustrée par la flèche 90c. Le fluide réfrigérant passe ensuite dans le dispositif de détente 11 où il subit une détente, illustrée par la flèche 110, passant de la pression p1a à la pression p3a. Le fluide réfrigérant traverse ensuite le deuxième échangeur de chaleur 13 où il subit une évaporation, illustrée par la flèche 130. Le fluide réfrigérant lors de sa traversée du deuxième échangeur de chaleur 13 absorbe de l'énergie calorifique du flux d'air intérieur 200 et passe de l'enthalpie h5a à l'enthalpie h6a. Le fluide réfrigérant repasse ensuite dans l'éjecteur 7 via sa deuxième entrée 7b, il subit de nouveau une perte de pression puis une recompression dans l'éjecteur 7 pour rejoindre le point 70c, c'est à dire à une pression p1a et une enthalpie h4a, comme le montre la flèche 70b.

Toujours au niveau du dispositif de séparation de phases 9, la phase gazeuse du fluide réfrigérant est quant à elle redirigée vers le compresseur 3. Du fait de la séparation de phases, le fluide réfrigérant en phase gazeuse à la première sortie 9b du dispositif de séparation de phases 9, tend à atteindre la courbe de saturation B en gagnant de l'enthalpie, comme le montre la flèche 90b. Avant d'atteindre le compresseur 3 le fluide réfrigérant issue de la première sortie 9a du dispositif de séparation de phases 9 se mélange au niveau du deuxième point de jonction 15b avec le fluide réfrigérant en provenance de la conduite de contournement A.

Au sein de la conduite de contournement A, le fluide réfrigérant passe au travers du troisième échangeur de chaleur 17 où il gagne de l'enthalpie comme illustré par la flèche 170. Ce mélange entre le fluide réfrigérant en phase gazeuse issu du dispositif de séparation de phases 9 et le fluide réfrigérant issue de la conduite de contournement A, permet d'atteindre l'enthalpie h1a du fluide réfrigérant qui dépasse la courbe de saturation B. Le fluide réfrigérant est donc en état de gaz surchauffé à l'enthalpie h1a et est à la pression p1a avant d'entrer dans le compresseur 3.

Le coefficient de performance (COP pour « coefficient of perfomance ») est amélioré par rapport à un circuit de climatisation « classique » de deux façons.

Premièrement, le COP est amélioré par l'action de l'éjecteur 7 qui permet au fluide réfrigérant, en entrée du compresseur 3, d'avoir une pression p1a supérieure à la pression p3a où l'échange de chaleur entre le flux d'air intérieur 200 et le fluide réfrigérant a lieu au niveau du deuxième échangeur de chaleur 13. Moins de puissance au niveau du compresseur 3 est donc nécessaire pour atteindre la pression p2a.

Deuxièmement, le COP est amélioré du fait de la présence du troisième échangeur de chaleur 17 qui permet une surchauffe du fluide réfrigérant avant son entrée dans le compresseur 3 et donc un gain d'enthalpie.

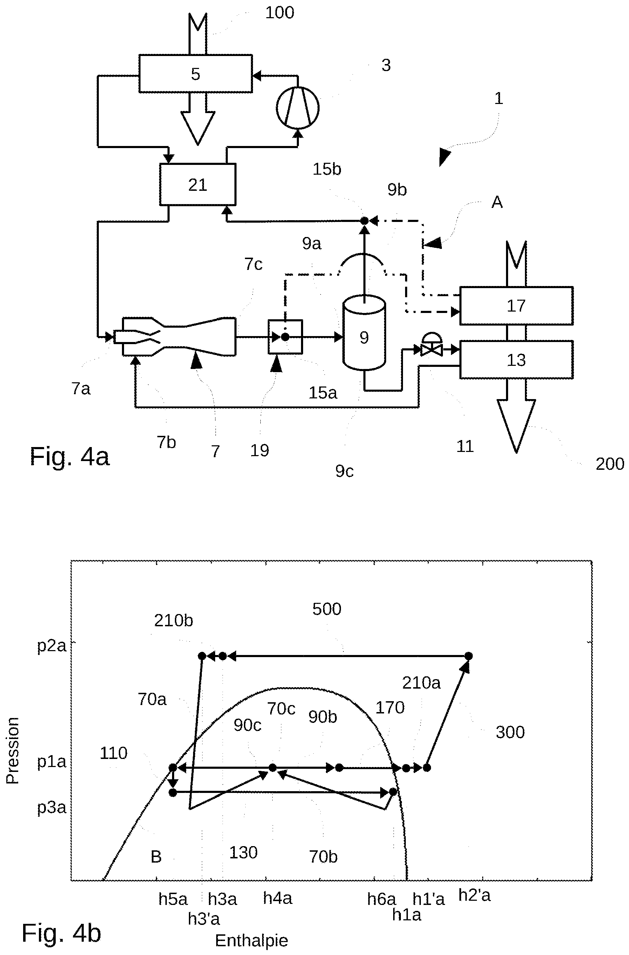

Selon une variante, le premier mode de fonctionnement peut fonctionner lorsque le circuit de climatisation 1 comporte un IHX 21, comme cela est illustré à la figure 4a. Cette variante du premier mode de fonctionnement comporte les mêmes étapes que le premier mode de fonctionnement illustré à la figure 3a, à la différence que :
- avant d'arriver dans l'éjecteur 7 au niveau de la première entrée 7a, le fluide réfrigérant passe par l'IHX 21, et
- avant d'arriver dans le compresseur 3, le mélange de fluide réfrigérant issue de la première sortie 9b du dispositif de séparation de phases 9 et du fluide réfrigérant en provenance de la conduite de contournement A passe également par l'IHX 21.

L'influence de l'IHX 21 est visible sur le diagramme pression /enthalpie de la figure 4b. L'IHX 21 permet une augmentation de l'enthalpie du fluide réfrigérant, illustrée par la flèche 210a, avant son entrée dans le compresseur 3. Le fluide réfrigérant passe alors d'une enthalpie h1a à une enthalpie h1'a et ensuite à une enthalpie h2'a après son passage dans le compresseur 3. Cette enthalpie h2'a est supérieure à l'enthalpie h2a précédente où il n'y avait pas d'IHX 21. Cette augmentation de l'enthalpie en amont du compresseur 3 est permise par la baisse de l'enthalpie du fluide réfrigérant en sortie du premier échangeur de chaleur 5, illustrée par la flèche 210b. Le fluide réfrigérant, avant d'arriver dans l'éjecteur 7 au niveau de la première entrée 7a, passe alors de l'enthalpie h3a à l'enthalpie h3'a. L'IHX 21 améliore le COP en diminuant l'enthalpie du fluide réfrigérant en sortie du premier échangeur de chaleur 5 et en la transférant au fluide réfrigérant avant son entrée dans le compresseur 3.

Néanmoins, plus l'enthalpie h3'a du fluide avant d'arriver dans l'éjecteur 7 au niveau de la première entrée 7a est faible, par exemple du fait de températures extérieures basses, moins l'efficacité de l'éjecteur 7 sur le COP est bonne. En effet, cela limite la recompression du fluide réfrigérant au niveau de l'éjecteur 7 qui permet au fluide réfrigérant de passer de la pression p3a au niveau du deuxième échangeur de chaleur 17 à la pression p1a avant son entrée dans le compresseur 3. Il faudrait alors augmenter la puissance du compresseur 3, et donc diminuer le COP, pour compenser cette diminution de la différence de pression entre p3a et p1a. Par exemple, pour des températures extérieures basses, le COP d'un circuit de climatisation 1 avec éjecteur 7 et IHX 21 peut être inférieur à un circuit de climatisation « classique » comprenant un IHX 21.

Le fait que le circuit de climatisation 1 comporte une boucle de contournement A comprenant le troisième échangeur de chaleur 17 permet de limiter cet effet négatif de l'IHX 21 sur l'efficacité de l'éjecteur 7. En effet, le troisième échangeur de chaleur 17 surchauffe le fluide réfrigérant qui est ainsi à une enthalpie h1a avant d'entrer dans l'IHX 21. Le fait que le fluide réfrigérant en provenance du dispositif de séparation de phase 9 et de la boucle de contournement A soit plus chaud, diminue l'efficacité de l'IHX 21 et donc l'enthalpie h3'a du fluide réfrigérant avant d'arriver dans l'éjecteur 7 au niveau de la première entrée 7a, sera moins faible et donc permettra à l'éjecteur 7 d'être efficace sur le COP du circuit de climatisation 1.

Le troisième échangeur de chaleur 17 peut par exemple être, à l'instar du deuxième échangeur de chaleur 13, destiné à être traversé par un flux d'air intérieur 200 à destination de l'habitacle du véhicule automobile. Dans ce cas de figure, ledit troisième échangeur de chaleur 17 est de préférence placé en amont du deuxième échangeur de chaleur 13, dans le sens de circulation du flux d'air intérieur 200 à destination de l'habitacle du véhicule automobile. En effet, cela permet au troisième échangeur de chaleur 17 d'être alimenté par un flux d'air intérieur 200 chaud et d'y puiser de l'énergie calorifique avant que ledit flux d'air intérieur 200 ne traverse le deuxième échangeur de chaleur 13. Cela permet également une augmentation de la surface d'échange entre le fluide réfrigérant et le flux d'air intérieur 200 et ainsi améliore les échanges de chaleur entre ledit fluide réfrigérant et ledit flux d'air intérieur 200.

Il est cependant tout à fait possible d'imaginer une position différente du troisième échangeur de chaleur 17. Ce dernier peut par exemple être un échangeur de chaleur branché sur autre circuit d'échange ou de régulation thermique du véhicule avec lequel il peut échanger de l'énergie calorifique.

Le circuit de climatisation 1 peut également comporter un dispositif de gestion et de distribution 19 du fluide réfrigérant en provenance de l'éjecteur 7 vers la conduite de contournement A et/ou le dispositif de séparation de phases 9. Ce dispositif de gestion et de distribution 19 permet le contrôle de la circulation du fluide réfrigérant.

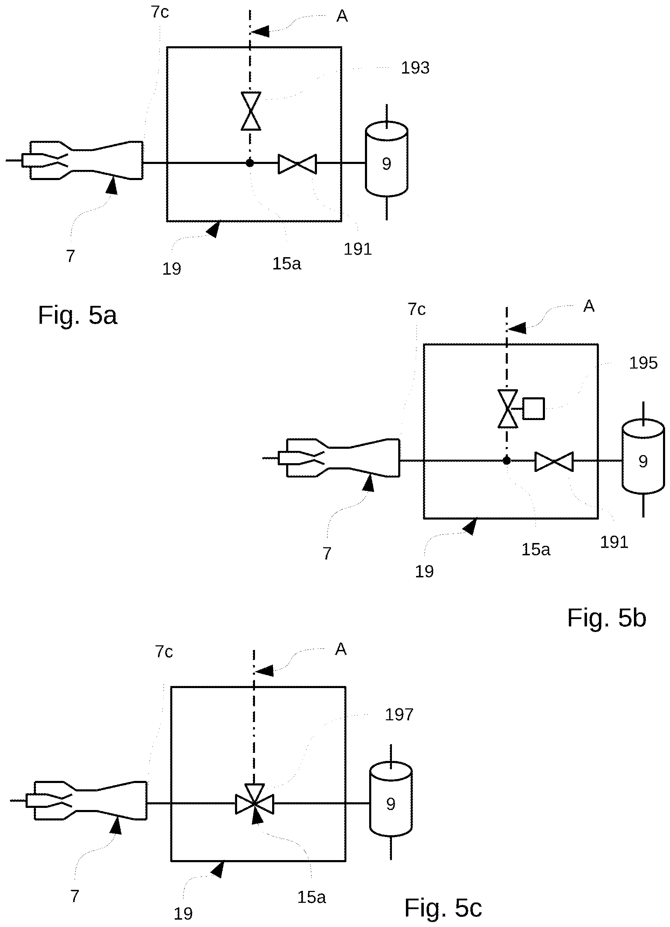

Comme illustré sur les figures 5a et 5b, le dispositif de gestion et de distribution 19 peut comporter une première vanne d'arrêt 191 disposée entre le premier point de jonction et le dispositif de séparation de phases 9.

Selon un premier mode de réalisation du dispositif de gestion et de distribution 19 illustré à la figure 5a, ce dernier comporte une deuxième vanne d'arrêt 193 disposée sur la conduite de contournement A, en plus de la première vanne d'arrêt 191.

Selon un deuxième mode de réalisation du dispositif de gestion et de distribution 19 illustré à la figure 5b, ce dernier comporte une vanne à ouverture variable 195 disposée sur la conduite de contournement A, en plus de la première vanne d'arrêt 191.

Comme illustré sur la figure 5c, le dispositif de gestion et de distribution 19 peut comporter une vanne trois voies 197 à débit variable disposée au niveau du premier point de jonction 15a.

La présence du dispositif de gestion et de distribution 19 permet au circuit de climatisation 1 d'adopter différents modes de fonctionnement. En effet, il est possible de contrôler vers où le fluide réfrigérant est dirigé. Il est même possible, selon les besoins, de faire varier la quantité de fluide réfrigérant envoyée vers le deuxième échangeur de chaleur 13 ou dans la conduite de contournement A, lorsque que le dispositif de gestion et de distribution 19 comporte une vanne à ouverture variable 195 ou une vanne trois voies 197 à débit variable.

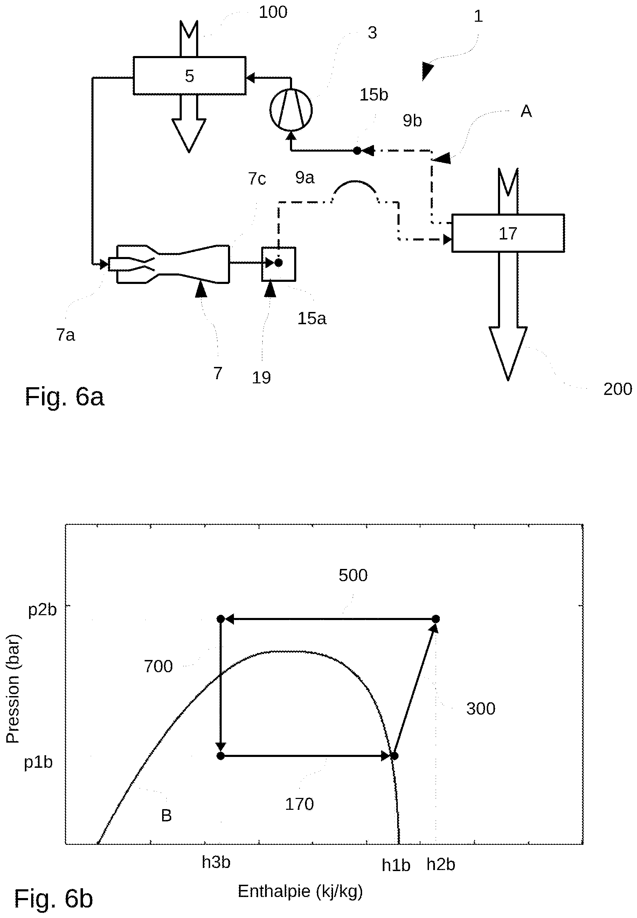

Le circuit de climatisation 1 peut ainsi fonctionner selon un deuxième mode de fonctionnement illustré à la figure 6a où le sens de circulation du fluide réfrigérant est représenté par des flèches. Dans ce deuxième mode de fonctionnement, la totalité du fluide réfrigérant en sortie de l'éjecteur 7 est redirigée par le dispositif de gestion et de distribution 19 vers le troisième échangeur de chaleur 17.

Dans ce deuxième mode de fonctionnement, le fluide réfrigérant passe successivement dans le compresseur 3, le premier échangeur de chaleur 5, l'éjecteur 7 et dans le troisième échangeur de chaleur 17 de la conduite de contournement A avant de retourner vers le compresseur 3.

Les variations de pression et d'enthalpie que subit le fluide réfrigérant lors de ce deuxième mode de fonctionnement, sont illustrées sur le diagramme pression / enthalpie de la figure 6b. La courbe B représente la courbe de saturation du fluide réfrigérant.

Le fluide réfrigérant à l'entrée du compresseur 3 est en phase gazeuse à une pression p1b et a une enthalpie h1b. Le fluide réfrigérant subit une compression, illustrée par la flèche 300, en passant dans le compresseur 3 et passe à une pression p2b et à une enthalpie h2b.

Le fluide réfrigérant traverse le premier échangeur de chaleur 5 et subit une perte d'enthalpie, illustrée par la flèche 500, du fait de la dissipation de chaleur dans le flux d'air extérieur 100 et de son passage en phase liquide. Le fluide réfrigérant passe alors d'une enthalpie h2b à une enthalpie h3b, tout en restant à une pression constante p2b.

Le fluide réfrigérant passe ensuite dans la première entrée 7a de l'éjecteur 7. Le fluide réfrigérant subit une perte de pression, illustrée par la flèche 700 et croise la courbe de saturation B, ce qui le fait passer dans un état de mélange liquide plus gaz. A la sortie 7c de l'éjecteur 7, le fluide réfrigérant est à la pression p1b et a une enthalpie h3b.

Le fluide réfrigérant passe ensuite dans le dispositif de gestion et de distribution 19 et est redirigé dans la conduite de contournement A.

Au sein de la conduite de contournement A, le fluide réfrigérant passe au travers du troisième échangeur de chaleur 17 où il gagne de l'enthalpie comme illustré par la flèche 170. Le fluide réfrigérant passe alors de l'enthalpie h3b à l'enthalpie h1b à la pression p1b, avant de rentrer de nouveau dans le compresseur 3.

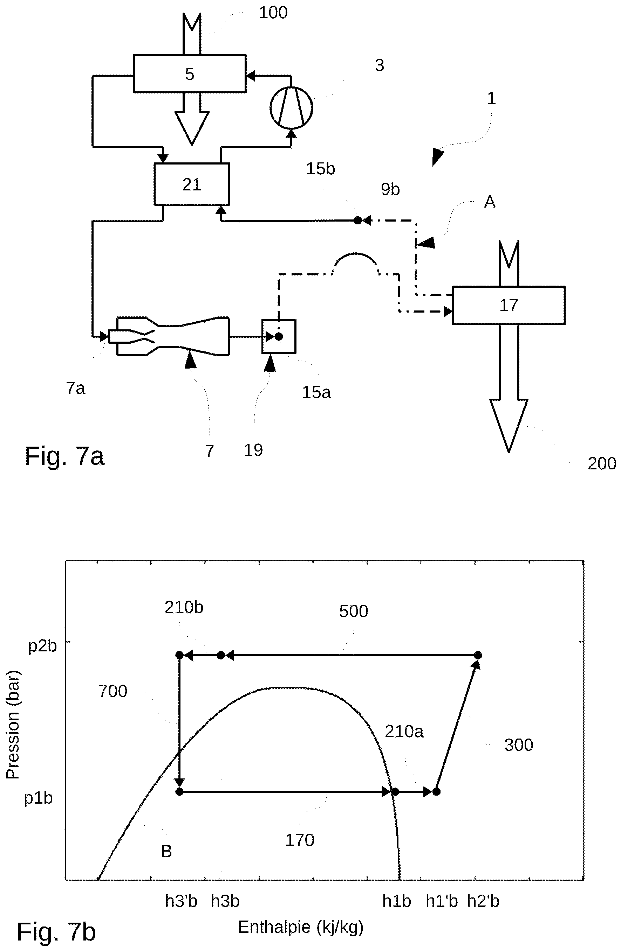

Selon une variante, le deuxième mode de fonctionnement peut fonctionner lorsque le circuit de climatisation 1 comporte un IHX 21 comme cela est illustré à la figure 7a. Cette variante du deuxième mode de fonctionnement comporte les mêmes étapes que le deuxième mode de fonctionnement illustré à la figure 6a, à la différence que :
- avant d'arriver dans l'éjecteur 7 au niveau de la première entrée 7a, le fluide réfrigérant passe par l'IHX 21, et
- avant d'arriver dans le compresseur 3, le fluide réfrigérant en provenance de la conduite de contournement A passe également par l'IHX 21.

L'influence de l'IHX 21 est visible sur le diagramme pression /enthalpie de la figure 7b. L'IHX 21 permet une augmentation de l'enthalpie du fluide réfrigérant, illustrée par la flèche 210a, avant son entrée dans le compresseur 3. Le fluide réfrigérant passe alors d'une enthalpie h1b à une enthalpie h1'b et ensuite à une enthalpie h2'b après son passage dans le compresseur 3. Cette enthalpie h2'b est supérieure à l'enthalpie h2b précédente où il n'y avait pas d'IHX 21. Cette augmentation de l'enthalpie en amont du compresseur 3 est permise par la baisse de l'enthalpie du fluide réfrigérant en sortie du premier échangeur de chaleur 5, illustrée par la flèche 210b. Le fluide réfrigérant, avant d'arriver dans l'éjecteur 7 au niveau de la première entrée 7a, passe alors de l'enthalpie h3b à l'enthalpie h3'b. L'IHX 21 améliore le COP en diminuant l'enthalpie du fluide réfrigérant en sortie du premier échangeur de chaleur 5 et en la transférant au fluide réfrigérant avant son entrée dans le compresseur 3.

Ce deuxième mode de fonctionnement et sa variante sont des équivalents à un fonctionnement « classique » d'un circuit de climatisation « classique » avec et sans IHX 21. L'éjecteur 7 n'amorce pas et a ici un rôle de détendeur simple. Ce deuxième mode de réalisation est de préférence utilisé pour des températures d'air extérieur en entrée du premier échangeur de chaleur 5 inférieures à 15° C et pour des fluides réfrigérant à faible charge thermique.

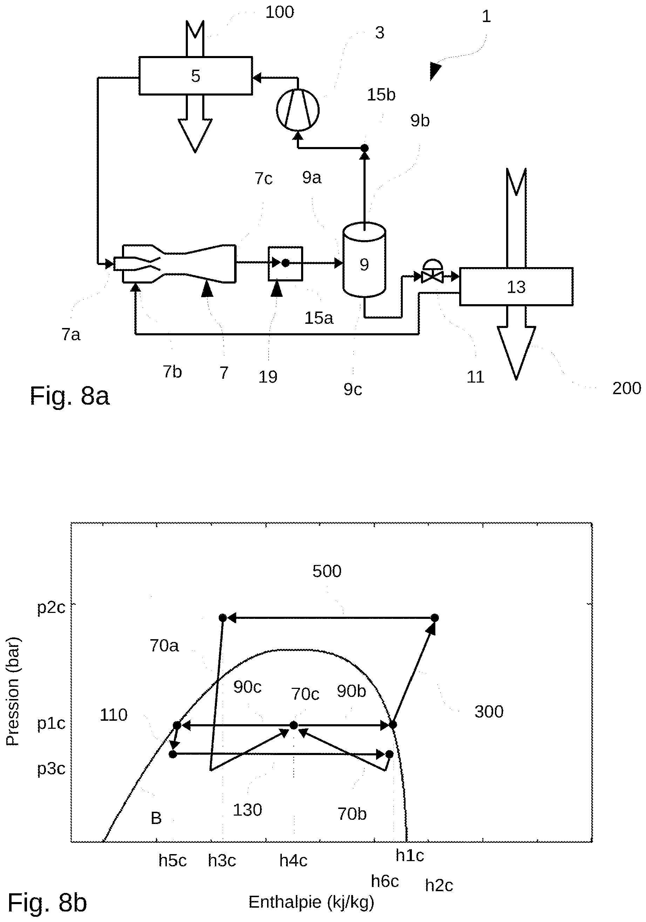

Le circuit de climatisation 1 peut également fonctionner selon un troisième mode de fonctionnement illustré à la figure 8a où le sens de circulation du fluide réfrigérant est représenté par des flèches. Dans ce troisième mode de fonctionnement, la totalité du fluide réfrigérant en sortie de l'éjecteur 7 est redirigée par le dispositif de gestion et de distribution 19 vers le dispositif de séparation de phases 9.

Dans ce troisième mode de fonctionnement, le fluide réfrigérant passe successivement dans le compresseur 3, le premier échangeur de chaleur 5, l'éjecteur 7, le dispositif de séparation de phases 9, et :
∘ la phase liquide du fluide réfrigérant passe ensuite dans le dispositif de détente 11, le deuxième échangeur de chaleur 13, le fluide réfrigérant revenant dans l'éjecteur 7,
∘ la phase gazeuse du fluide réfrigérant retourne vers le compresseur 3.

Les variations de pression et d'enthalpie que subit le fluide réfrigérant lors de ce troisième mode de fonctionnement, sont illustrées sur le diagramme pression / enthalpie de la figure 8b. La courbe B représente la courbe de saturation du fluide réfrigérant.

Le fluide réfrigérant à l'entrée du compresseur 3 est en phase gazeuse à une pression p1c et a une enthalpie h1c. Le fluide réfrigérant subit une compression, illustrée par la flèche 300, en passant dans le compresseur 3 et passe à une pression p2c et à une enthalpie h2c.

Le fluide réfrigérant traverse le premier échangeur de chaleur 5 et subit une perte d'enthalpie, illustrée par la flèche 500, du fait de la dissipation de chaleur dans le flux d'air extérieur 100 et de son passage en phase liquide. Le fluide réfrigérant passe alors d'une enthalpie h2c à une enthalpie h3c, tout en restant à une pression constante p2c.

Le fluide réfrigérant passe ensuite dans la première entrée 7a de l'éjecteur 7. Le fluide réfrigérant subit une perte de pression, illustrée par la flèche 70a, et croise la courbe de saturation B, ce qui le fait passer dans un état de mélange liquide plus gaz. Le fluide réfrigérant subit ensuite une recompression dans l'éjecteur 7 pour atteindre la sortie 7c dudit l'éjecteur 7, illustrée par le point 70c. A la sortie 7c de l'éjecteur 7, le fluide réfrigérant est la pression p1c et a une enthalpie h4c supérieure à l'enthalpie h3a précédente.

Le fluide réfrigérant passe ensuite dans le dispositif de séparation de phases 9. Au niveau du dispositif de séparation de phases 9, la phase liquide du fluide réfrigérant est séparée de la phase gazeuse. De ce fait, l'enthalpie du fluide réfrigérant en phase liquide à la deuxième sortie 9c du dispositif de séparation de phases 9, diminue pour rejoindre la courbe de saturation B et atteindre une valeur h5c. Cette diminution est illustrée par la flèche 90c. Le fluide réfrigérant passe ensuite dans le dispositif de détente 11 où il subit une détente, illustrée par la flèche 110, passant de la pression p1c à la pression p3c. Le fluide réfrigérant traverse ensuite le deuxième échangeur de chaleur 13 où il subit une évaporation, illustrée par la flèche 130. Le fluide réfrigérant lors de sa traversée du deuxième échangeur de chaleur 13 absorbe de l'énergie calorifique du flux d'air intérieur 200 et passe de l'enthalpie h5c à l'enthalpie h6c. Le fluide réfrigérant repasse ensuite dans l'éjecteur 7 via sa deuxième entrée 7b, il subit de nouveau une perte de pression puis une recompression dans l'éjecteur 7 pour rejoindre le point 70c, c'est à dire à une pression p1c et une enthalpie h4c, comme le montre la flèche 70b.

Toujours au niveau du dispositif de séparation de phases 9, la phase gazeuse du fluide réfrigérant est quant à elle redirigée vers le compresseur 3. Du fait de la séparation de phase, le fluide réfrigérant en phase gazeuse à la première sortie 9b du dispositif de séparation de phases 9, tend à atteindre la courbe de saturation B en gagnant de l'enthalpie, comme montré par la flèche 90b, et atteint l'enthalpie h1c à la pression p1c.

Le COP est amélioré par rapport à un circuit de climatisation « classique » par l'action de l'éjecteur 7 qui permet au fluide réfrigérant en entrée dudit compresseur 3 d'avoir une pression p1c supérieure à la pression p3c où l'échange de chaleur, entre le flux d'air intérieur 200 et le fluide réfrigérant, a lieu au niveau du deuxième échangeur de chaleur 13. Moins de puissance au niveau du compresseur 3 est donc nécessaire pour atteindre la pression p2c.

Ce troisième mode de fonctionnement est de préférence utilisé pour des températures d'air extérieur en entrée du premier échangeur de chaleur 5 supérieures à 60° C et notamment lorsque le fluide réfrigérant est du R744. En effet pour ce telles températures, l'éjecteur 7 fera subir au fluide réfrigérant une recompression importante et donc la pression au sein du dispositif de séparation de phases 9 sera trop importante et pourrait endommager le circuit.

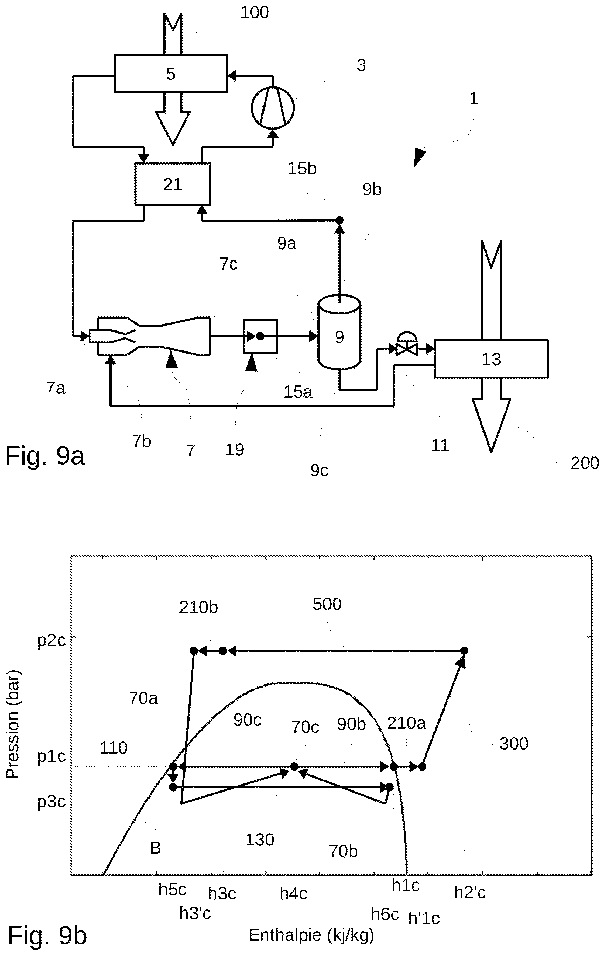

Selon une variante, le troisième mode de fonctionnement peut fonctionner lorsque le circuit de climatisation 1 comporte un IHX 21 comme cela est illustré à la figure 9a. Cette variante du troisième mode de fonctionnement comporte les mêmes étapes que le troisième mode de fonctionnement illustré à la figure 8a, à la différence que :
- avant d'arriver dans l'éjecteur 7 au niveau de la première entrée 7a, le fluide réfrigérant passe par l'IHX 21, et
- avant d'arriver dans le compresseur 3, le mélange de fluide réfrigérant issue de la première sortie 9b du dispositif de séparation de phase 9 passe également par l'IHX 21.

L'influence de l'IHX 21 est visible sur le diagramme pression /enthalpie de la figure 9b. L'IHX 21 permet une augmentation de l'enthalpie du fluide réfrigérant, illustrée par la flèche 210a, avant son entrée dans le compresseur 3. Le fluide réfrigérant passe alors d'une enthalpie h1c à une enthalpie h1'c et ensuite à une enthalpie h2'c après son passage dans le compresseur 3. Cette enthalpie h2'c est supérieure à l'enthalpie h2c précédente où il n'y avait pas d'IHX 21. Cette augmentation de l'enthalpie en amont du compresseur 3 est permise par la baisse de l'enthalpie du fluide réfrigérant en sortie du premier échangeur de chaleur 5, illustrée par la flèche 210b. Le fluide réfrigérant, avant d'arriver dans l'éjecteur 7 au niveau de la première entrée 7a, passe alors de l'enthalpie h3c à l'enthalpie h3'c. L'IHX 21 améliore le COP en diminuant l'enthalpie du fluide réfrigérant en sortie du premier échangeur de chaleur 5 et en la transférant au fluide réfrigérant avant son entrée dans le compresseur 3.

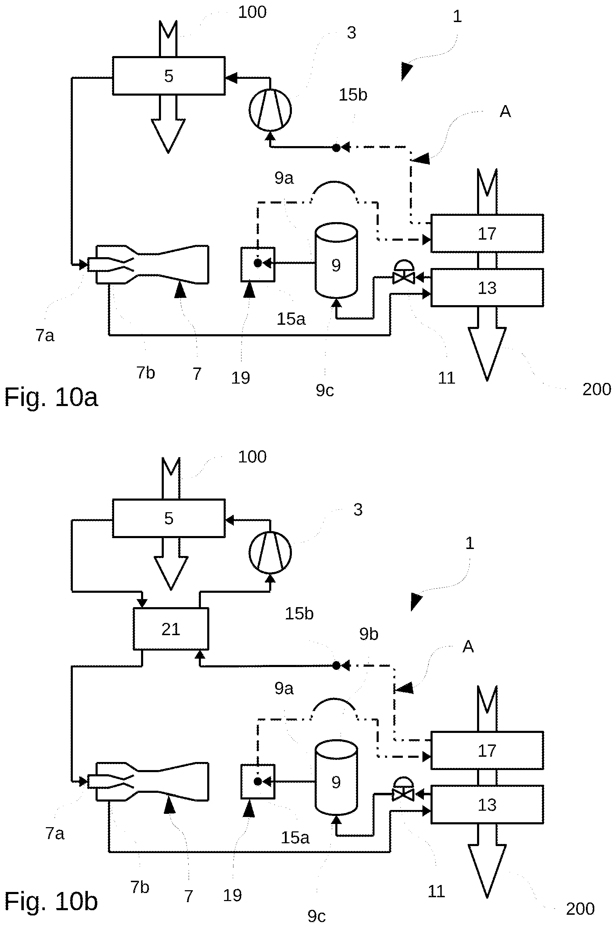

Le circuit de climatisation 1 peut également fonctionner dans un quatrième mode de fonctionnement illustré à la figure 10a.

Dans ce quatrième mode de fonctionnement, le fluide réfrigérant passe successivement dans le compresseur 3, le premier échangeur de chaleur 5, l'éjecteur 7, ressort par la deuxième entrée 7b dudit éjecteur 7, passe par le deuxième échangeur de chaleur 13, le dispositif de détente 11, le dispositif de séparation de phase 9, passe dans la conduite de contournement A, traverse le troisième échangeur de chaleur 17 avant de retourner au compresseur 3.

Selon une variante, le quatrième mode de fonctionnement peut fonctionner lorsque le circuit de climatisation 1 comporte un IHX 21 comme cela est illustré à la figure 10b. Cette variante du quatrième mode de fonctionnement comporte les mêmes étapes que le quatrième mode de fonctionnement illustré à la figure 10a, à la différence que :
- avant d'arriver dans l'éjecteur 7 au niveau de la première entrée 7a, le fluide réfrigérant passe par l'IHX 21, et
- avant d'arriver dans le compresseur 3, le mélange de fluide réfrigérant en provenance du troisième échangeur de chaleur 17 passe également par l'IHX 21.

Ainsi, on voit bien que de part son architecture, le circuit de climatisation 1 selon l'invention permet une utilisation selon différents modes de fonctionnement et permet également une optimisation du COP.

## Revendications

1. Circuit de climatisation (1) pour véhicule automobile dans lequel circule un fluide réfrigérant et comportant dans le sens de circulation du fluide réfrigérant :
∘ un compresseur (3),
∘ un premier échangeur de chaleur (5) destiné à être traversé par un flux d'air extérieur (100) au véhicule automobile et disposé en aval du compresseur (3),
∘ un éjecteur (7) disposé en aval du premier échangeur de chaleur (5), et comprenant :
• une première entrée (7a) de fluide réfrigérant, reliée audit premier échangeur de chaleur (5),
• une deuxième entrée (7b) de fluide réfrigérant, et
• une sortie (7c) de fluide réfrigérant,
∘ un dispositif de séparation de phases (9) du fluide réfrigérant comportant :
• une entrée de fluide réfrigérant (9a), reliée à la sortie (7c) de fluide réfrigérant de l'éjecteur (7),
• une première sortie (9b) de fluide réfrigérant en phase gazeuse, reliée au compresseur (3), et
• une deuxième sortie (9c) de fluide réfrigérant en phase liquide,
∘ un dispositif de détente (11) disposé en aval de la deuxième sortie (9c) de fluide réfrigérant du dispositif de séparation de phases (9),
∘ un deuxième échangeur de chaleur (13) destiné à être traversé par un flux d'air intérieur (200) à destination de l'habitacle du véhicule automobile, ledit deuxième échangeur (13) étant disposé en aval du dispositif de détente (11), entre ledit dispositif de détente (11) et la deuxième entrée (7b) de fluide réfrigérant de l'éjecteur (7),
**caractérisé en ce que** le circuit de climatisation (1) comporte en outre une conduite de contournement (A) du dispositif de séparation de phases (9) et
reliant :
∘ un premier point de jonction (15a) disposé en aval de la sortie (7c) de fluide réfrigérant de l'éjecteur (7), entre ledit éjecteur (7) et le dispositif de séparation de phases (9), et
∘ un deuxième point de jonction (15b) disposé en aval de la première sortie (9b) du dispositif de séparation de phases (9), entre ledit dispositif de séparation de phases (9) et le compresseur (3),
ladite conduite de contournement (A) comportant un troisième échangeur de chaleur (17).

2. Circuit de climatisation (1) selon la revendication précédente, **caractérisé en ce que** le circuit de climatisation (1) comporte un dispositif de gestion et de distribution (19) du fluide réfrigérant en provenance de l'éjecteur (7) vers la conduite de contournement (A) et/ou le dispositif de séparation de phases (9).

3. Circuit de climatisation (1) selon la revendication 2, **caractérisé en ce que** le dispositif de gestion et de distribution (19) comporte une première vanne d'arrêt (191) disposée entre le premier point de jonction et le dispositif de séparation de phases (9).

4. Circuit de climatisation (1) selon la revendication 3, **caractérisé en ce que** le dispositif de gestion et de distribution (19) comporte une deuxième vanne d'arrêt (193) disposée sur la conduite de contournement (A).

5. Circuit de climatisation (1) selon la revendication 3, **caractérisé en ce que** le dispositif de gestion et de distribution (19) comporte une vanne à ouverture variable (195) disposée sur la conduite de contournement (A).

6. Circuit de climatisation (1) selon la revendication 2, **caractérisé en ce que** le dispositif de gestion et de distribution (19) comporte une vanne trois voies (197) à débit variable disposée au niveau du premier point de jonction (15a).

7. Circuit de climatisation (1) selon l'une des revendications précédentes, **caractérisé en ce que** le troisième échangeur de chaleur (17) est destiné à être traversé par le flux d'air intérieur (200) à destination de l'habitacle du véhicule automobile.

8. Circuit de climatisation (1) selon la revendication précédente, **caractérisé en ce que** le troisième échangeur de chaleur (17) est placé en amont du deuxième échangeur de chaleur (13) dans le sens de circulation du flux d'air intérieur (200) à destination de l'habitacle du véhicule automobile.

9. Circuit de climatisation (1) selon l'une des revendications précédentes, **caractérisé en ce qu'**il comporte un échangeur de chaleur interne (21) permettant un échange de chaleur entre le fluide réfrigérant en sortie du premier échangeur de chaleur (5) et le fluide réfrigérant en sortie du dispositif de séparation de phases (9) et/ou du troisième échangeur de chaleur (17).

10. Circuit de climatisation (1) selon l'une des revendications 1 à 8, **caractérisé en ce qu'**il est configuré pour fonctionner dans un premier mode de fonctionnement où le fluide réfrigérant passe successivement dans le compresseur (3), le premier échangeur de chaleur (5), l'éjecteur (7),
∘ une première portion de fluide réfrigérant passant par le dispositif de séparation de phases (9), et :
▪ la phase liquide du fluide réfrigérant passe ensuite dans le dispositif de détente (11), le deuxième échangeur de chaleur (13), le fluide réfrigérant revenant dans l'éjecteur (7),
▪ la phase gazeuse du fluide réfrigérant retourne vers le compresseur (3), et
∘ une deuxième portion du fluide réfrigérant passant par le troisième échangeur de chaleur (17) de la conduite de contournement (A) avant de retourner vers le compresseur (3).

11. Circuit de climatisation (1) selon les revendications 9 et 10, **caractérisé en ce que** le fluide réfrigérant en sortie du premier échangeur de chaleur (5) passe dans l'échangeur de chaleur interne (21) avant d'arriver à l'éjecteur (7), la phase gazeuse du fluide réfrigérant en sortie du dispositif de séparation de phases (9) et le fluide réfrigérant en sortie du troisième échangeur de chaleur (17) se mélange avant de passer dans l'échangeur de chaleur interne (21) pour ensuite retourner vers le compresseur (3).

12. Circuit de climatisation (1) selon l'une des revendications 2 à 8, **caractérisé en ce qu'**il est configuré pour fonctionner dans un deuxième mode de fonctionnement où le fluide réfrigérant passe successivement dans le compresseur (3), le premier échangeur de chaleur (5), l'éjecteur (7), le troisième échangeur de chaleur (17) de la conduite de contournement (A) avant de retourner vers le compresseur (3).

13. Circuit de climatisation (1) selon les revendications 9 et 12, **caractérisé en ce que** le fluide réfrigérant en sortie du premier échangeur de chaleur (5) passe dans l'échangeur de chaleur interne (21) avant d'arriver à l'éjecteur (7) et le fluide réfrigérant en sortie du troisième échangeur de chaleur (17) passe dans l'échangeur de chaleur interne (21) avant de retourner vers le compresseur (3).

14. Circuit de climatisation (1) selon l'une des revendications 2 à 8, **caractérisé en ce qu'**il est configuré pour fonctionner dans un troisième mode de fonctionnement où le fluide réfrigérant passe successivement dans le compresseur (3), le premier échangeur de chaleur (5), l'éjecteur (7), le dispositif de séparation de phases (9), et :
∘ la phase liquide du fluide réfrigérant passe ensuite dans le dispositif de détente (11), le deuxième échangeur de chaleur (13), le fluide réfrigérant revenant dans l'éjecteur (7),
∘ la phase gazeuse du fluide réfrigérant retourne vers le compresseur (3).

15. Circuit de climatisation (1) selon selon les revendications 9 et 14, **caractérisé en ce que** le fluide réfrigérant en sortie du premier échangeur de chaleur (5) passe dans l'échangeur de chaleur interne (21) avant d'arriver à l'éjecteur (7) et la phase gazeuse du fluide réfrigérant en sortie du dispositif de séparation de phases (9) passe dans l'échangeur de chaleur interne (21) avant de retourner vers le compresseur (3).

## Patentansprüche

1. Klimaanlagenkreislauf (1) für ein Kraftfahrzeug, in dem ein Kältemittel zirkuliert und der in Zirkulationsrichtung des Kältemittels aufweist:
∘ einen Kompressor (3),
∘ einen ersten Wärmetauscher (5), der dazu bestimmt ist, von einem Außenluftstrom (100) des Fahrzeugs durchströmt zu werden, und stromab des Kompressors (3) angeordnet ist,
∘ einen Ejektor (7), der stromab des ersten Wärmetauschers (5) angeordnet ist und umfasst:
• einen ersten Kältemitteleingang (7a), der mit dem ersten Wärmetauscher (5) verbunden ist,
• einen zweiten Kältemitteleingang (7b) und
• einen Kältemittelausgang (7c),
∘ eine Phasentrennvorrichtung (9) für das Kältemittel, die aufweist:
• einen Kältemitteleingang (9a), der mit dem Kältemittelausgang (7c) des Ejektors (7) verbunden ist,
• einen ersten Ausgang (9b) für Kältemittel in gasförmiger Phase, der mit dem Kompressor (3) verbunden ist, und
• einen zweiten Ausgang (9c) für Kältemittel in flüssiger Phase,
∘ eine Entspannungsvorrichtung (11), die stromab des zweiten Kältemittelausgangs (9c) der Phasentrennvorrichtung (9) angeordnet ist,
∘ einen zweiten Wärmetauscher (13), der dazu bestimmt ist, von einem für den Fahrgastraum des Kraftfahrzeugs bestimmten Innenluftstrom (200) durchströmt zu werden, wobei der zweite Tauscher (13) stromab der Entspannungsvorrichtung (11), zwischen der Entspannungsvorrichtung (11) und dem zweiten Kältemitteleingang (7b) des Ejektors (7), angeordnet ist,
**dadurch gekennzeichnet, dass** der Klimaanlagenkreislauf (1) ferner eine Umgehungsleitung (A) zur Umgehung der Phasentrennvorrichtung (9) aufweist, die verbindet:
∘ eine erste Verbindungsstelle (15a), die stromab des Kältemittelausgangs (7c) des Ejektors (7), zwischen dem Ejektor (7) und der Phasentrennvorrichtung (9), angeordnet ist, und
∘ eine zweite Verbindungsstelle (15b), die stromab des ersten Ausgangs (9b) der Phasentrennvorrichtung (9), zwischen der Phasentrennvorrichtung (9) und dem Kompressor (3), angeordnet ist,
wobei die Umgehungsleitung (A) einen dritten Wärmetauscher (17) aufweist.

2. Klimaanlagenkreislauf (1) nach dem vorhergehenden Anspruch, **dadurch gekennzeichnet, dass** der Klimaanlagenkreislauf (1) eine Vorrichtung zur Steuerung und Verteilung (19) des vom Ejektor (7) kommenden Kältemittels zur Umgehungsleitung (A) und/oder zur Phasentrennvorrichtung (9) aufweist.

3. Klimaanlagenkreislauf (1) nach Anspruch 2, **dadurch gekennzeichnet, dass** die Vorrichtung zur Steuerung und Verteilung (19) ein erstes Absperrventil (191) aufweist, das zwischen der ersten Verbindungsstelle und der Phasentrennvorrichtung (9) angeordnet ist.

4. Klimaanlagenkreislauf (1) nach Anspruch 3, **dadurch gekennzeichnet, dass** die Vorrichtung zur Steuerung und Verteilung (19) ein zweites Absperrventil (193) aufweist, das an der Umgehungsleitung (A) angeordnet ist.

5. Klimaanlagenkreislauf (1) nach Anspruch 3, **dadurch gekennzeichnet, dass** die Vorrichtung zur Steuerung und Verteilung (19) ein Ventil mit variabler Öffnung (195) aufweist, das an der Umgehungsleitung (A) angeordnet ist.

6. Klimaanlagenkreislauf (1) nach Anspruch 2, **dadurch gekennzeichnet, dass** die Vorrichtung zur Steuerung und Verteilung (19) ein Dreiwegeventil (197) mit variablem Durchfluss aufweist, das auf Ebene der ersten Verbindungsstelle (15a) angeordnet ist.

7. Klimaanlagenkreislauf (1) nach einem der vorhergehenden Ansprüche, **dadurch gekennzeichnet, dass** der dritte Wärmetauscher (17) dazu bestimmt ist, von dem für den Fahrgastraum des Kraftfahrzeugs bestimmten Innenluftstrom (200) durchströmt zu werden.

8. Klimaanlagenkreislauf (1) nach dem vorhergehenden Anspruch, **dadurch gekennzeichnet, dass** der dritte Wärmetauscher (17) stromauf des zweiten Wärmetauschers (13) in Zirkulationsrichtung des für den Fahrgastraum des Kraftfahrzeugs bestimmten Innenluftstroms (200) platziert ist.

9. Klimaanlagenkreislauf (1) nach einem der vorhergehenden Ansprüche, **dadurch gekennzeichnet, dass** er einen inneren Wärmetauscher (21) aufweist, der einen Wärmeaustausch zwischen dem aus dem ersten Wärmetauscher (5) austretenden Kältemittel und dem aus der Phasentrennvorrichtung (9) und/oder dem dritten Wärmetauscher (17) austretenden Kältemittel ermöglicht.

10. Klimaanlagenkreislauf (1) nach einem der Ansprüche 1 bis 8, **dadurch gekennzeichnet, dass** er dazu ausgestaltet ist, in einer ersten Betriebsart betrieben zu werden, in der das Kältemittel nacheinander in den Kompressor (3), den ersten Wärmetauscher (5), den Ejektor (7) strömt,
∘ wobei ein erster Kältemittelanteil durch die Phasentrennvorrichtung (9) strömt und:
• die flüssige Phase des Kältemittels anschließend in die Entspannungsvorrichtung (11), den zweiten Wärmetauscher (13) strömt, wobei das Kältemittel in den Ejektor (7) zurückkommt,
• die gasförmige Phase des Kältemittels zum Kompressor zurückkehrt (3) und
∘ ein zweiter Kältemittelanteil durch den dritten Wärmetauscher (17) der Umgehungsleitung (A) strömt, bevor er zum Kompressor (3) zurückkehrt.

11. Klimaanlagenkreislauf (1) nach den Ansprüchen 9 und 10, **dadurch gekennzeichnet, dass** das aus dem ersten Wärmetauscher (5) austretende Kältemittel in den inneren Wärmetauscher (21) strömt, bevor es zum Ejektor (7) gelangt, wobei die aus der Phasentrennvorrichtung (9) austretende gasförmige Phase des Kältemittels und das aus dem dritten Wärmetauscher (17) austretende Kältemittel sich mischen, bevor sie in den inneren Wärmetauscher (21) strömen, um anschließend zum Kompressor (3) zurückzukehren.

12. Klimaanlagenkreislauf (1) nach einem der Ansprüche 2 bis 8, **dadurch gekennzeichnet, dass** er dazu ausgestaltet ist, in einer zweiten Betriebsart betrieben zu werden, in der das Kältemittel nacheinander in den Kompressor (3), den ersten Wärmetauscher (5), den Ejektor (7), den dritten Wärmetauscher (17) der Umgehungsleitung (A) strömt, bevor es zum Kompressor (3) zurückkehrt.

13. Klimaanlagenkreislauf (1) nach den Ansprüchen 9 und 12, **dadurch gekennzeichnet, dass** das aus dem ersten Wärmetauscher (5) austretende Kältemittel in den inneren Wärmetauscher (21) strömt, bevor es zum Ejektor (7) gelangt, und das aus dem dritten Wärmetauscher (17) austretende Kältemittel in den inneren Wärmetauscher (21) strömt, bevor es zum Kompressor (3) zurückkehrt.

14. Klimaanlagenkreislauf (1) nach einem der Ansprüche 2 bis 8, **dadurch gekennzeichnet, dass** er dazu ausgestaltet ist, in einer dritten Betriebsart betrieben zu werden, in der das Kältemittel nacheinander in den Kompressor (3), den ersten Wärmetauscher (5), den Ejektor (7), die Phasentrennvorrichtung (9) strömt, und:
∘ die flüssige Phase des Kältemittels anschließend in die Entspannungsvorrichtung (11), den zweiten Wärmetauscher (13) strömt, wobei das Kältemittel in den Ejektor (7) zurückkommt,
∘ die gasförmige Phase des Kältemittels zum Kompressor zurückkehrt (3).

15. Klimaanlagenkreislauf (1) nach den Ansprüchen 9 und 14, **dadurch gekennzeichnet, dass** das aus dem ersten Wärmetauscher (5) austretende Kältemittel in den inneren Wärmetauscher (21) strömt, bevor es zum Ejektor (7) gelangt, und die aus der Phasentrennvorrichtung (9) austretende gasförmige Phase des Kältemittels in den inneren Wärmetauscher (21) strömt, bevor sie zum Kompressor (3) zurückkehrt.

## Claims

1. Air conditioning circuit (1) for a motor vehicle, through which there circulates a refrigerant and which comprises, in the direction in which the refrigerant circulates:
∘ a compressor (3),
∘ a first heat exchanger (5) intended to have passing through it a flow (100) of air external to the motor vehicle and positioned downstream of the compressor (3),
∘ an ejector (7) positioned downstream of the first heat exchanger (5) and comprising:
• a first refrigerant inlet (7a), connected to said first heat exchanger (5),
• a second refrigerant inlet (7b), and
• a refrigerant outlet (7c),
∘ a refrigerant phase-separation device (9) comprising:
• a refrigerant inlet (9a) connected to the refrigerant outlet (7c) of the ejector (7),
• a first refrigerant outlet (9b) for refrigerant in the gaseous phase, which is connected to the compressor (3), and
• a second refrigerant outlet (9c) for refrigerant in the liquid phase,
∘ an expansion device (11) positioned downstream of the second refrigerant outlet (9c) of the phase-separation device (9),
∘ a second heat exchanger (13) intended to have passing through it a flow (200) of internal air intended for the motor vehicle interior, said second exchanger (13) being positioned downstream of the expansion device (11), between said expansion device (11) and the second refrigerant inlet (7b) of the ejector (7),
**characterized in that** the air conditioning circuit (1) further comprises a bypass line (A) bypassing the phase-separation device (9) and connecting:
∘ a first junction point (15a) positioned downstream of the refrigerant outlet (7c) of the ejector (7), between said ejector (7) and the phase-separation device (9), and
∘ a second junction point (15b) positioned downstream of the first outlet (9b) of the phase-separation device (9), between said phase-separation device (9) and the compressor (3), said bypass line (A) comprising a third heat exchanger (17).

2. Air conditioning circuit (1) according to the preceding claim, **characterized in that** the air conditioning circuit (1) comprises a management and distribution device (19) for the refrigerant coming from the ejector (7) towards the bypass line (A) and/or the phase-separation device (9).

3. Air conditioning circuit (1) according to Claim 2, **characterized in that** the management and distribution device (19) comprises a first shut-off valve (191) positioned between the first junction point and the phase-separation device (9).

4. Air conditioning circuit (1) according to Claim 3, **characterized in that** the management and distribution device (19) comprises a second shut-off valve (193) positioned on the bypass line (A).

5. Air conditioning circuit (1) according to Claim 3, **characterized in that** the management and distribution device (19) comprises a variable-opening valve (195) positioned on the bypass line (A).

6. Air conditioning circuit (1) according to Claim 2, **characterized in that** the management and distribution device (19) comprises a variable throughput three-way valve (197) positioned at the first junction point (15a).

7. Air conditioning circuit (1) according to one of the preceding claims, **characterized in that** the third heat exchanger (17) is intended to have passing through it the flow (200) of interior air intended for the motor vehicle interior.

8. Air conditioning circuit (1) according to the preceding claim, **characterized in that** the third heat exchanger (17) is sited upstream of the second heat exchanger (13) in the direction in which the flow (200) of interior air intended for the motor vehicle interior circulates.

9. Air conditioning circuit (1) according to one of the preceding claims, **characterized in that** it comprises an internal heat exchanger (21) allowing an exchange of heat between the refrigerant leaving the first heat exchanger (5) and the refrigerant leaving the phase-separation device (9) and/or the third heat exchanger (17).

10. Air conditioning circuit (1) according to one of Claims 1 to 8, **characterized in that** it is configured to operate in a first mode of operation in which the refrigerant passes in succession through the compressor (3), the first heat exchanger (5), the ejector (7),
∘ a first portion of refrigerant passing through the phase-separation device (9), and:
▪ the liquid phase of the refrigerant then passes into the expansion device (11), the second heat exchanger (13), the refrigerant coming back to the ejector (7),
▪ the gaseous phase of the refrigerant returns to the compressor (3), and
∘ a second portion of the refrigerant passing through the third heat exchanger (17) of the bypass line (A) before returning to the compressor (3).

11. Air conditioning circuit (1) according to Claims 9 and 10, **characterized in that** the refrigerant leaving the first heat exchanger (5) passes into the internal heat exchanger (21) before arriving at the ejector (7), the gaseous phase of the refrigerant leaving the phase-separation device (9) and the refrigerant leaving the third heat exchanger (17) mix before passing into the internal heat exchanger (21) to then return to the compressor (3).

12. Air conditioning circuit (1) according to one of Claims 2 to 8, **characterized in that** it is configured to operate in a second mode of operation in which the refrigerant passes in succession into the compressor (3), the first heat exchanger (5), the ejector (7), the third heat exchanger (17) of the bypass line (A) before returning to the compressor (3).

13. Air conditioning circuit (1) according to Claims 9 and 12, **characterized in that** the refrigerant leaving the first heat exchanger (5) passes into the internal heat exchanger (21) before arriving at the ejector (7) and the refrigerant leaving the third heat exchanger (17) passes into the internal heat exchanger (21) before returning to the compressor (3).

14. Air conditioning circuit (1) according to one of Claims 2 to 8, **characterized in that** it is configured to operate in a third mode of operation in which the refrigerant passes in succession into the compressor (3), the first heat exchanger (5), the ejector (7), the phase-separation device (9), and:
∘ the liquid phase of the refrigerant then passes into the expansion device (11), the second heat exchanger (13), the refrigerant coming back to the ejector (7),
∘ the gaseous phase of the refrigerant returns to the compressor (3).

15. Air conditioning circuit (1) according to Claims 9 and 14, **characterized in that** the refrigerant leaving the first heat exchanger (5) passes into the internal heat exchanger (21) before arriving at the ejector (7) and the gaseous phase of the refrigerant leaving the phase-separation device (9) passes into the internal heat exchanger (21) before returning to the compressor (3).
